# EUROPEAN PATENT SPECIFICATION

(11) **EP 1 059 839 B1**
(45) Date of publication and mention of the grant of the patent: **26.11.2003**
(21) Application number: 00900964.8
(22) Date of filing: 05.01.2000
(51) Int. Cl.: A01J 5/007, A01J 5/04

(54) **A VACUUM CONTROL SYSTEM**
VAKUUMSTEUERUNGSSYSTEM
SYSTEME DE REGULATION D'ASPIRATION

(30) Priority: 06.01.1999 NL 1010963
(43) Date of publication of application: 20.12.2000
(73) Proprietor: Lely Enterprises AG, 6300 ZUG (CH)
(72) Inventor: OORT, Dick, Marius, NL-3813 CL Amersfoort (NL)
(74) Representative: Corten, Maurice Jean F.M.
(86) International application number: PCT/NL00/00007
(87) International publication number: WO 00/040076

(56) References cited:
- EP-A- 0 576 086
- EP-A- 0 584 890
- WO-A-96/25036
- WO-A-97/01270
- WO-A-98/34472
- WO-A-98/46068

## Description

The invention relates to a vacuum control system as described in the preamble of claim 1.

Such a vacuum control system is known from WO 97/01270..In this known vacuum control system the milking vacuum is established by a vacuum pump of the dynamic type and is regulated to a desired level by means of a regulating valve of a quick operating type. The regulating valve being controlled by an electronic control unit, which is connected to a pressure sensor for sensing the pressure in the vacuum conduit of the vacuum system. WO 98/460 68 discloses a vacuum control system wherein the vacuum level is regulated by varying the rotational speed of the pump.

The invention aims at providing an alternative vacuum control system.

In accordance with the invention, this is achieved by means of the measures described in claim 1. By means of the vacuum sensor it is possible to activate the frequency regulator on the basis of the vacuum measured. In this manner it is possible to reduce the number of revolutions of the vacuum pump during milking when the air consumption is very low, as a result of which much energy is saved relative to the known system. Because of the fact that it is possible to choose a higher rotational speed of the pump than in the situation of the existing pump, e.g. 3,600 revolutions per minute, it is further possible still to displace the same quantity of air of 400 litres per minute with a smaller pump. A further advantage of the frequency regulator is that the stability of the vacuum level can be guaranteed in the long term.

The invention will now be explained in further detail with reference to the accompanying drawing.

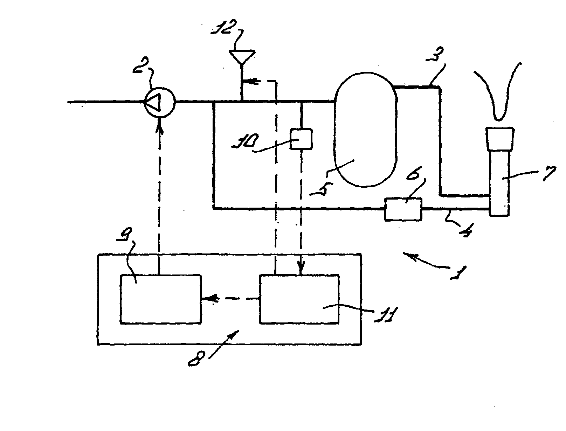

Figure 1 shows schematically the vacuum control system according to the invention.

Figure 1 shows a vacuum control system 1 for controlling the vacuum when milking an animal. The vacuum control system 1 may constitute part of a conventional milking machine or a milking robot. The vacuum control system 1 comprises a vacuum pump 2 with a milk line 3 and a pulse line 4 connected thereto. In the milk line 3 there is included a buffer vessel 5 which, in the present embodiment, is designed as a milk glass. To the buffer vessel 5 there is further connected a non-shown line which is connected to a neither shown milk tank. In the pulse line 4 there is further included a pulsator 6 by means of which an alternating vacuum can be applied in a pulsation room of a teat cup 7.

The vacuum control system 1 further comprises a regulator 8 by means of which the vacuum level in the system can be controlled at a desired vacuum level. In the vacuum control system 1 there is included an electronic valve 12 by means of which air can be admitted to the vacuum control system. The electronic valve 12 comprises a non-shown fast-acting control valve, which is known per se from the automobile engineering. In the vacuum control system 1 there is further included a vacuum sensor 10 which supplies its signal to the regulator 8. In the regulator 8 there is further included a filter unit 11 for filtering the signal emanating from the vacuum sensor 10. The electronic valve 12 is activated by the regulator 8, on the basis of the signals supplied by the vacuum sensor 10. The vacuum sensor 10 and the electronic valve 12 are included in that part of the vacuum line system, which is located between the buffer vessel 5 and the vacuum pump 2. The regulator 8 comprises a frequency regulator 9 by means of which the number of revolutions of the vacuum pump 2 can be controlled.

## Claims

1. A vacuum control system for controlling the vacuum during milking an animal, which vacuum control system is provided with a vacuum pump (2) with a milk line (3), with a pulse line (4) and at least one teat cup (7) connected thereto, with a regulator (8) by means of which the vacuum in the system (1) is controlled at a desired vacuum level, said regulator (8) comprising an electronic valve (12) by means of which air can be admitted to the system (1), said electronic valve (12) being connected to the regulator (8), and with a vacuum sensor (10) which is connected to the regulator (8), **characterized in that** the regulator (8) comprises a speed regulator, preferably a frequency regulator (9), by means of which the number of revolutions of the vacuum pump (2) is controlled.

2. A vacuum control system as claimed in claim 1, **characterized in that** the regulator (8) comprises a filter unit (11) by means of which the signal emanating from the vacuum sensor (10) is filtered.

3. A vacuum control system as claimed in claim 1 or 2, **characterized in that** the valve (12) is included in a vacuum line.

4. A vacuum control system as claimed in claim 1, 2 or 3, **characterized in that** the system (1) comprises several teat cups (7) and that in the system (1) each of the teat cups (7) has an own valve (12).

5. A vacuum control system as claimed in any one of the preceding claims, **characterized in that** the system (1) comprises a vacuum buffer vessel (5).

6. A vacuum control system as claimed in any one of the preceding claims, **characterized in that** the system (1) comprises a pulsator (6) for applying a pulsating vacuum in the teat cup (7).

7. A milking robot for automatically connecting teat cups to an animal to be milked, which milking robot is provided with a vacuum control system as described in any one of claims 1 to 6.

## Patentansprüche

1. Vakuumsteuerungssystem zum Steuern des Vakuums während des Melkens eines Tieres, wobei das Vakuumsteuerungssystem eine Vakuumpumpe (2) aufweist mit einer Milchleitung (3), mit einer Pulsierleitung (4) und mindestens einem daran angeschlossenen Zitzenbecher (7), mit einem Regler (8), mittels dessen das Vakuum in dem System (1) auf einem gewünschten Vakuumpegel gehalten wird, wobei der Regler (8) ein elektronisches Ventil (12) umfaßt, mittels dessen Luft in das System (1) eingeleitet werden kann, wobei das elektronische Ventil (12) mit dem Regler (8) verbunden ist, und mit einem Vakuumsensor (10), der mit dem Regler (8) verbunden ist,
**dadurch gekennzeichnet, daß** der Regler (8) einen Geschwindigkeitsregler, vorzugsweise einen Frequenzregler (9), umfaßt, mittels dessen die Drehzahl der Vakuumpumpe (2) gesteuert wird.

2. Vakuumsteuerungssystem nach Anspruch 1,
**dadurch gekennzeichnet, daß** der Regler (8) eine Filtereinheit (11) umfaßt, mittels der das von dem Vakuumsensor (10) ausgehende Signal gefiltert wird.

3. Vakuumsteuerungssystem nach Anspruch 1 oder 2,
**dadurch gekennzeichnet, daß** das Ventil (12) in einer Vakuumleitung angeordnet ist.

4. Vakuumsteuerungssystem nach Anspruch 1, 2 oder 3,
**dadurch gekennzeichnet, daß** das System (1) mehrere Zitzenbecher (7) umfaßt, und daß in dem System (1) jeder der Zitzenbecher (7) ein eigenes Ventil (12) aufweist.

5. Vakuumsteuerungssystem nach einem der vorhergehenden Ansprüche,
**dadurch gekennzeichnet, daß** das System (1) einen Vakuumpufferbehälter (5) umfaßt.

6. Vakuumsteuerungssystem nach einem der vorhergehenden Ansprüche,
**dadurch gekennzeichnet, daß** das System (1) einen Pulsator (6) zum Erzeugen eines pulsierenden Vakuums in dem Zitzenbecher (7) umfaßt.

7. Melkroboter zum automatischen Anschließen von Zitzenbechern an ein zu melkendes Tier, wobei der Melkroboter mit einem Vakuumsteuerungssystem nach einem der Ansprüche 1 bis 6 versehen ist.

## Revendications

1. Système de régulation d'aspiration permettant de réguler l'aspiration pendant la traito d'un animal, lequel système de régulation d'aspiration est équipé d'une pompe à vide (2) ayant un lactoduc (3), d'une canalisation d'impulsion (4) ayant au moins un gobelet trayeur (7) connecté à celle-ci, d'un régulateur (8) à l'aide duquel l'aspiration dans le système (1) est régulée à un niveau d'aspiration désiré, ledit régulateur (8) comprenant un clapet électronique (12) grâce auquel de l'air peut être admis dans le système (1), ledit clapet électronique (12) étant connecté au régulateur (8), et d'un détecteur de vide (10) qui est connecté au régulateur (8), **caractérisé en ce que** le régulateur (8) comprend un régulateur de vitesse, de préférence un régulateur de fréquence (9), par l'intermédiaire duquel le régime de la pompe à vide (2) est régulé.

2. Système de régulation d'aspiration selon la revendication 1, **caractérisé en ce que** le régulateur (8) comprend une unité de filtre (11) à l'aide de laquelle le signal provenant du détecteur de vide (10) est filtré.

3. Système de régulation d'aspiration selon la revendication 1 ou 2, **caractérisé en ce que** le clapet (12) est intégré dans une canalisation sous vide.

4. Système de régulation d'aspiration selon la revendication 1, 2 ou 3, **caractérisé en ce que** le système (1) comprend plusieurs gobelets trayeurs (7) et **en ce que**, dans le système (1), chacun des gobelets trayeurs (7) a son propre clapet (12).

5. Système de régulation d'aspiration selon l'une quelconque des précédentes revendications, **caractérisé en ce que** le système (1) comprend un réservoir intermédiaire sous vide (5).

6. Système de régulation d'aspiration selon l'une quelconque des précédentes revendications, **caractérisé en ce que** le système (1) comprend un pulsateur (6) destiné à appliquer un vide pulsatoire dans le gobelet trayeur (7).

7. Robot de traite destiné à placer automatiquement des gobelets trayeurs sur un animal à traire, lequel robot de traite est équipé d'un système de régulation d'aspiration selon l'une quelconque des revendications 1 à 6.
